# EUROPÄISCHE PATENTSCHRIFT

(11) **EP 3 075 620 B1**
(45) Veröffentlichungstag und Bekanntmachung des Hinweises auf die Patenterteilung: **07.04.2021**
(21) Anmeldenummer: 16000225.9
(22) Anmeldetag: 29.01.2016
(51) Int. Cl.: B60W 30/19, B60K 6/48, B60W 10/06, B60W 10/08, B60W 10/11, F16H 61/04

(54) **VERFAHREN ZUR DURCHFÜHRUNG EINER GANGSCHALTUNG BEI PARALLEL-HYBRID-FAHRZEUGEN**
METHOD FOR PERFORMING A GEAR CHANGE IN PARALLEL HYBRID VEHICLES
PROCEDE DE REALISATION D'UN CHANGEMENT DE VITESSE SUR DES VEHICULES HYBRIDES PARALLELES

(30) Priorität: 26.03.2015 DE 102015003900
(43) Veröffentlichungstag der Anmeldung: 05.10.2016
(73) Patentinhaber: MAN Truck & Bus SE, 80995 München (DE)
(72) Erfinder: Kirchensteiner, Elmar, 85256 Vierkirchen (DE); Günnewicht, Manuel, 81243 München (DE); Hierlmeier, Matthias, 80997 München (DE); Ovari, Sebastian, 85241 Hebertshausen (DE); Nuber, Johannes, 85748 Garching (DE)
(74) Vertreter: v. Bezold & Partner Patentanwälte - PartG mbB

(56) Entgegenhaltungen:
- EP-A2- 2 450 599
- WO-A1-00/03163
- DE-A1-102007 038 775
- DE-A1-102009 002 918

## Beschreibung

Die Erfindung betrifft ein Verfahren zur Durchführung einer Gangschaltung bei einem Parallel-Hybrid-Fahrzeug, dessen Antriebsstrang einen Verbrennungsmotor, eine motorisch und generatorisch betreibbare elektrische Maschine und ein Getriebe umfasst.

Aus der Praxis ist bekannt, dass bei den durchzuführenden Schaltvorgängen eines Schaltgetriebes insbesondere dann, wenn an der Getriebeeingangsseite vergleichsweise große Drehzahlsprünge auftreten, innerhalb der Getriebeanordnung vergleichsweise hohe Synchronisierarbeiten zu verrichten sind. Es muss nämlich die Getriebeeingangswelle beispielsweise bei Durchführung eines Abwärtsschaltvorgangs in vergleichsweise kurzer Zeit auf eine deutlich höhere Drehzahl gebracht werden. Je größer der Drehzahlsprung ist, desto länger dauert die Synchronisierphase, was zur Folge hat, dass die durchzuführenden Schaltvorgänge vergleichsweise lang sind bzw. bei sehr niedrigen Temperaturen nur unter Aufbringung sehr hoher Schaltkräfte, die ggf. durch eine Stelleinrichtung nicht mehr geliefert werden können, möglich wären. Neben der vergleichsweise langen Synchronisationszeit können im Getriebe Schaltgeräusche auftreten bzw. besteht die potentielle Gefahr eines übermäßigen Verschleißes bzw. eines für einen Fahrer unkomfortablen Schaltvorgangs.

Aus der DE 10 2005 007 966 A1, DE 10 2009 002 918 A1, WO 00/03163 A1 und der WO 2009/021915 A1 sind Verfahren zur Durchführung einer Gangschaltung bei einem Parallel-Hybrid-Fahrzeug bekannt, die bei einem Gangwechsel des Getriebes den Elektromotor zur Drehzahlsynchronisation des Getriebes mit einer Zieldrehzahl des Verbrennungsmotors verwenden. Hierbei wird die zur Synchronisierung auf den neuen Gang erforderliche Drehzahlanpassung der elektrischen Maschine und des Verbrennungsmotors durch eine Drehzahlanpassung der elektrischen Maschine in einem Drehzahlregelmodus durchgeführt. Da der Verbrennungsmotor jedoch eine vergleichsweise hohe Trägheitsmasse hat, benötigt die elektrische Maschine relativ viel Zeit, um den Verbrennungsmotor zu beschleunigen und/oder abzubremsen, was wiederum zu vergleichsweise langen Synchronisationszeiten führt, die mit den zuvor genannten Nachteilen verbunden sind.

Es ist somit eine Aufgabe der Erfindung, ein verbessertes Verfahren zur Durchführung einer Gangschaltung bei einem Parallel-Hybrid-Fahrzeug bereitzustellen, mit dem Nachteile herkömmlicher Techniken vermieden oder zumindest reduziert werden können. Es ist insbesondere eine Aufgabe der Erfindung, ein Verfahren zur Durchführung einer Gangschaltung bei einem Parallel-Hybrid-Fahrzeug bereitzustellen, mit dem verkürzte Schaltzeiten ermöglicht werden.

Diese Aufgaben werden durch ein Verfahren mit den Merkmalen des Hauptanspruchs gelöst. Vorteilhafte Ausführungsformen und Anwendungen der Erfindung ergeben sich aus den abhängigen Ansprüchen und werden in der folgenden Beschreibung unter teilweiser Bezugnahme auf die Figuren näher erläutert.

Erfindungsgemäß wird ein Verfahren zur Durchführung einer Gangschaltung bei einem Parallel-Hybrid-Fahrzeug bereitgestellt, dessen Antriebsstrang einen Verbrennungsmotor, eine motorisch und generatorisch betreibbare elektrische Maschine, ein Getriebe und vorzugsweise eine zwischen Verbrennungsmotor und elektrischer Maschine angeordnete Kupplung umfasst. Das Getriebe ist vorzugsweise ein automatisiertes Getriebe.

Gemäß allgemeinen Gesichtspunkten der Erfindung erfolgt die Drehzahlsynchronisation über einen momentengesteuerten Betrieb des Verbrennungsmotors (inklusive Motorbremse) und einen drehzahlgeregelten Betrieb der elektrischen Maschine. Mit anderen Worten erfolgt die zur Drehzahlsynchronisierung auf einen neuen Gang erforderliche Drehzahlanpassung der Komponenten auf der Getriebeeingangsseite, umfassend den Verbrennungsmotor, die elektrische Maschine und den Getriebeeingangsschaft, durch einen gesteuerten Betrieb des Verbrennungsmotors, bei dem ein vorzugsweise pulsförmiges Solldrehmoment vorgegeben wird, und einen drehzahlgeregelten Betrieb der elektrischen Maschine, wobei die elektrische Maschine das Einregeln auf die Zieldrehzahl übernimmt.

Die Kombination aus einem momentengesteuerten Betrieb des Verbrennungsmotors und einem drehzahlgeregelten Betrieb der elektrischen Maschine ermöglicht ein Zusammenwirken des Verbrennungsmotors und der elektrischen Maschine beim Gangwechsel, so dass die elektrische Maschine nicht die volle Beschleunigungsarbeit leisten muss. Dadurch kann eine Verkürzung der Schaltzeiten gegenüber dem bekannten Verfahren erzielt werden, bei dem die zur Synchronisierung auf den neuen Gang erforderliche Drehzahlanpassung der elektrischen Maschine und des Verbrennungsmotors ausschließlich durch eine Drehzahlanpassung der elektrischen Maschine in einem Drehzahlregelmodus durchgeführt wird. Insbesondere eine kurze Schaltzeit bei Rückschaltungen an Steigungen vermindert die Zeit der Zugkraftunterbrechung und damit den Geschwindigkeitsverlust. Dies wirkt sich positiv auf den Kraftstoffverbrauch aus, bei gleichzeitiger Steigerung des Fahrkomforts.

Da die elektrische Maschine typischerweise sehr gute Regeleigenschaften aufweist und sowohl positive wie negative Momente zulässt, kann ein eventuelles Überschwingen der Drehzahl, verursacht durch einen steilen Gradienten des momentengesteuerten Verbrennungsmotors, ausgeregelt werden. Die Energie, die die elektrische Maschine während des Ausregelns erzeugt bzw. benötigt, kann in einem Traktionsspeicher für elektrische Energie zwischengespeichert oder aus diesem entnommen werden und hat somit keinen negativen Einfluss auf den Kraftstoffverbrauch.

Ist eine Kupplung zwischen Verbrennungsmotor und elektrischer Maschine vorgesehen, erfolgt die Drehzahlsynchronisation bei geschlossener Kupplung.

Gemäß einem bevorzugten Ausführungsbeispiel erfolgt die Drehzahlsynchronisation unter gleichzeitiger Ansteuerung des Verbrennungsmotors und der elektrischen Maschine. Hierbei wird der Verbrennungsmotor bei einer Hochschaltung abgebremst und bei einer Rückschaltung beschleunigt. Das Einregeln auf eine Zieldrehzahl erfolgt wiederum durch den drehzahlgeregelten Betrieb der elektrischen Maschine.

Die erfindungsgemäße Realisierung sieht hierbei vor, dass der momentengesteuerte Betrieb des Verbrennungsmotors so ausgeführt ist, dass zu Beginn der Drehzahlsynchronisierung der Verbrennungsmotor ein erstes Drehmoment erzeugt, das rampenförmig auf einen ersten Drehmomentsollwert ansteigt und nach einer vorbestimmten Pulsdauer wieder rampenförmig abfällt.

Ferner ist der drehzahlgeregelte Betrieb der elektrischen Maschine so ausgeführt, dass zu Beginn der Drehzahlsynchronisierung die elektrische Maschine ein zweites Drehmoment erzeugt, das rampenförmig auf einen zweiten Drehmomentsollwert ansteigt und in die gleiche Richtung wie das erste Drehmoment des Verbrennungsmotors wirkt. Um eine dann verbleibende Drehzahldifferenz auf null auszuregeln, erzeugt die elektrische Maschine anschließend mindestens ein weiteres positives und/oder negatives Drehmoment.

Durch das Zusammenwirken von Verbrennungsmotor und elektrischer Maschine, d. h. durch die Addition der beiden Drehmomente, kann die zur Drehzahlsynchronisation erforderliche Beschleunigung in kürzerer Zeit erzielt werden.

Es ist besonders vorteilhaft, wenn das vom Verbrennungsmotor zu Beginn der Drehzahlsynchronisierung erzeugte erste Drehmoment einen näherungsweise rechteckförmigen Verlauf und/oder den Verlauf einer steilen Rampe aufweist. Vorteilhafterweise kann das von der elektrischen Maschine zu Beginn der Drehzahlsynchronisierung erzeugte zweite Drehmoment ebenfalls einen solchen Verlauf aufweisen. Es ist ein besonderer Vorzug der Erfindung, dass die Kombination von einer gesteuerten und einer geregelten Maschine sehr steile Rampen ohne großes Überschwingen der Drehzahl ermöglicht.

Bei einer vorteilhaften Variante werden der erste Drehmomentsollwert und/oder der zweite Drehmomentsollwert in Abhängigkeit von einer Höhe eines an der Getriebeeingangsseite zu realisierenden Drehzahlsprungs, der für die Drehzahlsynchronisierung des Schaltvorgangs erforderlich ist, festgelegt. Die vorzugebenden Drehmomentsollwerte, die zu Beginn des Drehzahlsynchronisierungsvorgangs erzeugt werden, können beispielsweise vorab in einer Zuordnungstabelle hinterlegt werden. Diese Variante bietet den Vorteil, dass die Momente, die von der elektrische Maschine und dem Verbrennungsmotor zu Beginn der Drehzahlsynchronisierung erzeugt werden, bereits in Abhängigkeit von der Höhe des Drehzahlsprungs so festgelegt werden, dass damit eine gute Annäherung an die Zieldrehzahl erreicht wird und die nachfolgende Ausregelung der verbleibenden Drehzahldifferenz durch den drehzahlgeregelten Betrieb der elektrische Maschine besonders schnell erfolgen kann.

Gemäß einer weiteren Ausführungsform der Erfindung wird die Beschleunigung des Verbrennungsmotors bei einer Gangrückschaltung durch eine Erhöhung der Kraftstoffeinspritzung erzeugt. Ferner kann das Abbremsen des Verbrennungsmotors bei einer Ganghochschaltung durch einen Motorbremsbetrieb erzeugt werden, bei dem die Kraftstoffeinspritzung unterbrochen und eine Motorbremseinrichtung, vorzugsweise eine Abgasklappe, aktiviert wird.

Gemäß einem weiteren Aspekt der Erfindung können zum Durchführen eines Gangwechsels die folgenden Schritte nacheinander durchgeführt werden: Durchführen eines Momentenabbaus, Ausgelegen eines aktuellen Ganges, Durchführen der Drehzahlsynchronisation gemäß einem Verfahren wie in diesem Dokument beschrieben, Einlegen eines Folgegangs und Durchführen eines Momentenaufbaus. Die vorgenannten Schritte, mit Ausnahme der Durchführung der Drehzahlsynchronisation, können in an sich bekannter Weise wie bei einem konventionellen Schaltvorgang eines rein verbrennungsmotorisch angetrieben Fahrzeugs durchgeführt werden.

Gemäß einem weiteren Gesichtspunkt der Erfindung wird ein Steuergerät zur Steuerung der Komponenten eines Antriebsstrangs eines Parallel-Hybrid-Fahrzeugs bereitgestellt, wobei der Antriebsstrang einen Verbrennungsmotor, eine motorisch und generatorisch betreibbare elektrische Maschine, ein automatisiertes Getriebe und vorzugsweise eine zwischen Verbrennungsmotor und elektrischer Maschine angeordnete Kupplung umfasst. Das Steuergerät ist ausgeführt, das Verfahren zur Durchführung einer Gangschaltung wie hierin offenbart durchzuführen. Zur Vermeidung von Wiederholungen sollen rein verfahrensgemäß offenbarte Merkmale auch für das Steuergerät als vorrichtungsgemäß offenbart gelten und beanspruchbar sein.

Die Erfindung betrifft ferner ein Parallel-Hybrid-Kraftfahrzeug, insbesondere ein Nutzfahrzeug, aufweisend ein derartiges Steuergerät.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: ein schematisches Blockschaltbild eines Antriebsstrangs eines Parallel-Hybrid-Fahrzeugs;
- Figur 2: ein Ablaufdiagramm zur Illustration des Verfahrens zur Durchführung einer Gang-schaltung gemäß einer Ausführungsform der Erfindung;
- Figur 3A: den Drehzahl- und Momentenverlauf bei einer herkömmlichen Drehzahlsynchronisation; und
- Figur 3B: den Drehzahl- und Momentenverlauf bei einer Drehzahlsynchronisation gemäß einer Ausführungsform der Erfindung.

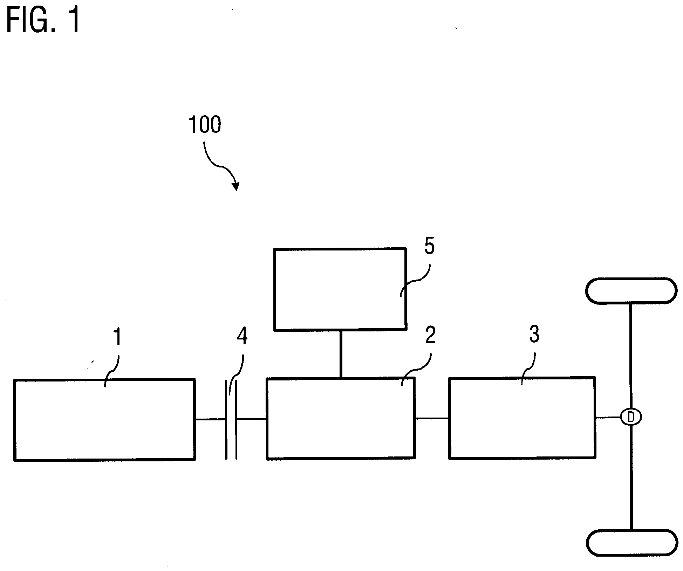

Figur 1 zeigt ein schematisches Blockschaltbild eines Antriebsstrangs 100 eines Parallel-Hybrid-Fahrzeugs. Der Antriebsstrang 100 umfasst in an sich bekannter Weise einen Verbrennungsmotor 1 und zumindest eine motorisch und generatorisch betreibbare elektrische Maschine 2, die in dieser Reihenfolge hintereinander geschaltet sind, wobei der Verbrennungsmotor 1 durch Öffnen einer Kupplung 4 von der elektrischen Maschine 2 und somit vom Antriebsstrang 100 abkoppelbar ist.

In Kraftflussrichtung nach der elektrischen Maschine 2 ist ein automatisiertes Schaltgetriebe 3 angeordnet, mit dem Gangwechsel durchgeführt werden können. Die elektrische Maschine ist ferner mit einem Traktionsenergiespeicher 5 für elektrische Energie verbunden, über den die elektrische Maschine 2 im motorischen Betrieb mit elektrischer Antriebsenergie versorgt wird und in dem während eines generatorischen Betriebs der elektrischen Maschine 2 rekuperierte Energie gespeichert werden kann. Mit Hilfe der Trennkupplung 4 in einer geöffneten Stellung kann das Fahrzeug in den Betriebsmodi "Elektrisch Fahren" und "Rekuperation" ohne das hohe Schleppmoment des Verbrennungsmotors 1 betrieben werden. Die Leistung der elektrischen Maschine 2 kann unabhängig vom Verbrennungsmotor 1 gewählt werden.

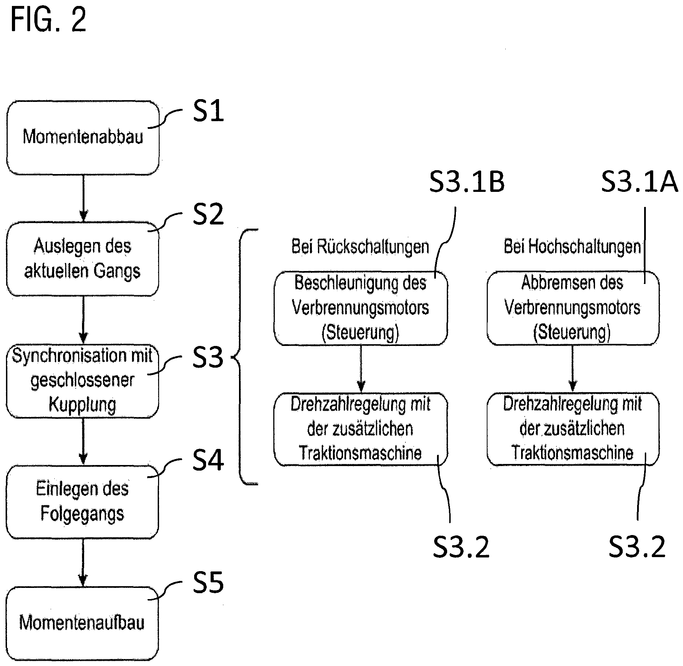

Figur 2 zeigt ein Ablaufdiagramm zur Illustration des Verfahrens zur Durchführung einer Gangschaltung gemäß einer Ausführungsform der Erfindung,

Zur Durchführung des hier vorgestellten Verfahrens ist die Kupplung 4 geschlossen, wodurch die beiden Motoren 1, 2 miteinander gekoppelt sind, so dass sich das Moment beider Motoren 1, 2 addiert.

Gemäß der Erfindung beginnt die Schaltung wie eine konventionelle Schaltung. In Schritt S1 erfolgt zunächst ein Momentenabbau, bei dem das momentane motorische Abtriebsmoment im Antriebsstrang 100 reduziert wird. Dann wird in Schritt S2 wie bei einer konventionellen Schaltung der aktuelle Gang ausgelegt.

In Schritt S3 erfolgt dann die zur Drehzahlsynchronisierung auf einen neuen Gang erforderliche Drehzahlanpassung der Komponenten auf der Getriebeeingangsseite (Verbrennungsmotor 1, elektrische Maschine 2 und Getriebeeingangsschaft) über einen momentengesteuerten Betrieb des Verbrennungsmotors 1 und einen drehzahlgeregelten Betrieb der elektrischen Maschine 2.

Im Folgenden wird die Drehzahlsynchronisierung anhand einer Rückschaltung von einem hohen auf einen niedrigeren Gang beschrieben.

Die Drehzahlsynchronisation erfolgt unter gleichzeitiger Ansteuerung des Verbrennungsmotors 1 und der elektrischen Maschine 2. Hierbei wird der Verbrennungsmotor 1 bei der Rückschaltung beschleunigt (Schritt S3.1B), und das Einregeln auf eine Zieldrehzahl 6 erfolgt durch den drehzahlgeregelten Betrieb der elektrischen Maschine (Schritt S3.2).

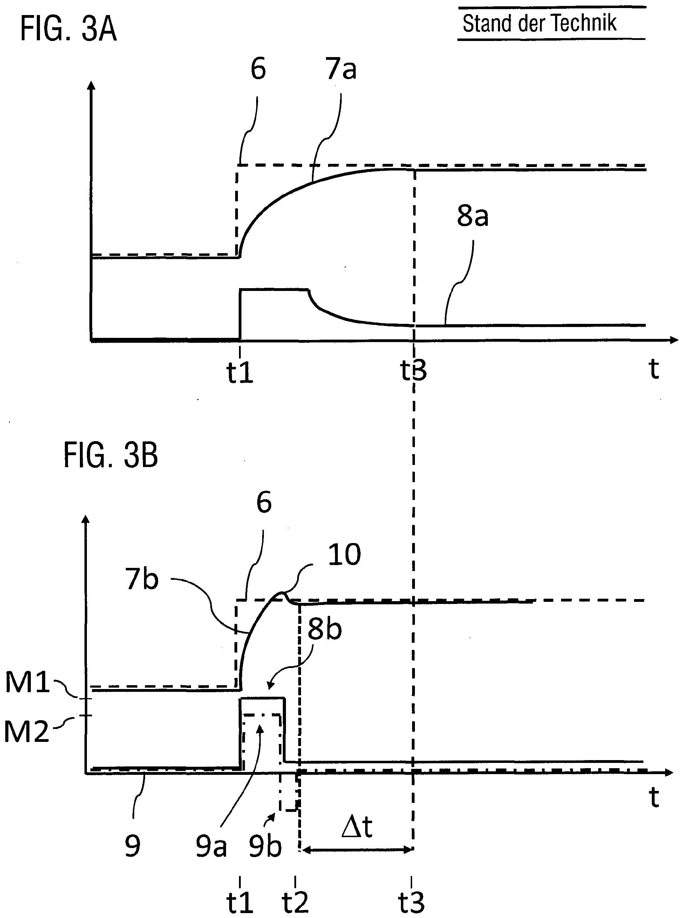

Dies ist in Figur 3B beispielhaft anhand des Drehzahl- und Momentenverlaufs bei einer Drehzahlsynchronisation während einer Gangrückschaltung illustriert. Die horizontale Achse gibt den Zeitverlauf an. Die untere durchgezogene Linie 8b gibt den zeitlichen Verlauf des Moments des Verbrennungsmotors 1 an. Die gestrichpunktete Linie 9 gibt einen typischen zeitlichen Verlauf des Moments der elektrischen Maschine 2 an.

Die obere durchgezogene Linie 7b stellt den zeitlichen Verlauf der Ist-Drehzahl von Verbrennungsmotor 1, elektrischer Maschine 2 und Getriebeeingangsschaft dar.

Nach dem Auslegen des aktuellen Gangs beginnt im Zeitpunkt t1 die Drehzahlsynchronisation. Die Getriebesteuerung gibt in Abhängigkeit von bisherigem Gang und dem Folgegang eine Solldrehzahl vor, die die zur Drehzahlsynchronisierung auf einen neuen Gang erforderliche Drehzahlanpassung angibt. Der Verlauf der Solldrehzahl ist in Figur 3B durch die gestrichelte Linie 6 dargestellt. Zum Zeitpunkt t1 steigt diese sprunghaft auf die neue Solldrehzahl an, auf die die Drehzahl 7b der Komponenten auf der Getriebeeingangsseite eingeregelt werden muss.

Vorstehend wurde bereits erwähnt, dass der Verbrennungsmotor 1 und die elektrische Maschine 2 gleichzeitig zur Drehzahlsynchronisation verwendet werden, wobei der Verbrennungsmotor 1 gesteuert arbeitet, die elektrische Maschine jedoch drehzahlgeregelt arbeitet.

Der momentengesteuerte Betrieb des Verbrennungsmotors 1 ist dadurch realisiert, dass zu Beginn t1 der Drehzahlsynchronisierung der Verbrennungsmotor 1 einen kurzen Drehmomentpuls erzeugt, erkennbar an dem näherungsweise rechteckförmigen Peak der Kurve 8b. Das vom Verbrennungsmotor erzeugte Drehmoment steigt in Form einer steilen Rampe auf den Wert M1 an und fällt nach einer Pulsdauer wieder rampenförmig auf einen kleinen Wert und bleibt dann konstant, unabhängig von der noch einzuregelnden Drehzahldifferenz. Die Beschleunigung des Verbrennungsmotors 1 wird durch eine entsprechende Erhöhung der Kraftstoffeinspritzung erzeugt.

Im Wesentlichen gleichzeitig mit dem Verbrennungsmotor 1 erzeugt die elektrische Maschine 2 im Zeitpunkt t1 ebenfalls ein Drehmoment 9a, das in Form einer steilen Rampe auf den Wert M2 ansteigt und in die gleiche Richtung wie der vom Verbrennungsmotor erzeugte Drehmomentpeak wirkt. Die beiden Drehmomente addieren sich zu einem Drehmoment M1+M2 und bewirken eine schnelle Erhöhung der Ist-Drehzahl 7b, die sich schnell dem Sollwert 6 annähert.

Die Größe der erzeugten Drehmomente M1 und M2 können in Abhängigkeit von einer Höhe des zu realisierenden Drehzahlsprungs, der für die Drehzahlsynchronisierung des Schaltvorgangs erforderlich ist, festgelegt werden, z. B. anhand einer hinterlegten Tabelle.

Im vorliegenden Beispiel erzeugt der steile Gradient des erzeugten Drehmoments M1+M2 ein Überschwingen 10 der Drehzahl über den Sollwert 6. Da die elektrische Maschine 2 im Gegensatz zum Verbrennungsmotor drehzahlgeregelt betrieben wird, erzeugt die elektrische Maschine 2 daraufhin einen kleineren und kürzeren negativen Drehmomentpeak 9b, um die Drehzahldifferenz auf null auszuregeln. Da die elektrische Maschine 2 sehr gute Regeleigenschaften aufweist, kann ein solches Überschwingen 10 der Drehzahl schnell ausgeregelt werden. Zum Zeitpunkt t2, d. h. innerhalb der Zeitintervalls t2-t1 ist die Synchrondrehzahl erreicht.

Zur Illustration der erfindungsgemäßen Unterschiede und Vorteile ist in Figur 3A eine herkömmliche, aus dem Stand der Technik bekannte Drehzahlsynchronisierung bei einem Schaltvorgang lediglich unter Verwendung des Verbrennungsmotors 1 dargestellt. Die Kurve 6 gibt wiederum die Solldrehzahl (Zieldrehzahl) an. Die Kurve 7a zeigt die Ist-Drehzahl der Komponenten auf der Getriebeeingangsseite. Die Kurve 8a gibt den Verlauf des Moments des Verbrennungsmotors an.

Der Verbrennungsmotor ist während der Drehzahlsynchronisation drehzahlgeregelt betrieben. Nach Beginn der Drehzahlsynchronisierung im Zeitpunkt t1 erzeugt der Verbrennungsmotor einen Drehmomentpuls. Da der Verbrennungsmotor die Beschleunigungsleistung "alleine", d. h. ohne Hilfe der elektrische Maschine aufbringen muss, dauert es im Vergleich zur Figur 3B länger, bis ist die Komponenten auf der Getriebeeingangsseite auf die Solldrehzahl beschleunigt werden können. Die Kurve 7a steigt somit langsamer an als die Kurve 7b des erfindungsgemäßen Ausführungsbeispiels. Ferner erfolgt das Einregeln auf die Zieldrehzahl im Beispiel der Figur 3A durch den Verbrennungsmotor, dessen erzeugtes Drehmoment langsam zurückgefahren wird, bis die Kurve 7a im Zeitpunkt t3 die Zieldrehzahl 6 erreicht hat.

Die Zeitdifferenz Δt=t3-t2 stellt die Zeitersparnis dar, die mit dem erfindungsgemäßen Verfahren im Vergleich zu dem in Figur 3A dargestellten herkömmlichen Verfahren erzielt werden kann.

Nachdem die Zieldrehzahl erreicht wurde, wird in Schritt S4 der Figur 2 der Folgegang eingelegt und in Schritt S5 das Moment wieder aufgebaut. Die Schritte S4 und S5 entsprechen denen bei einem konventionellen Schaltvorgang.

Das Verfahren zum Hochschalten eines Ganges erfolgt in analoger Weise, mit dem Unterschied, dass bei einer Ganghochschaltung der Verbrennungsmotor 1 abgebremst wird (SchrittS3.1A). Dies wird vorliegend durch einen Motorbremsbetrieb erzeugt, bei dem die Kraftstoffeinspritzung unterbrochen und eine Motorbremse in Form einer Abgasklappe aktiviert wird.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Zusätzlich können viele Modifikationen ausgeführt werden, ohne den zugehörigen Bereich zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen.

### Bezugszeichenliste

- 1: Verbrennungsmotor
- 2: Elektrische Maschine
- 3: Automatisiertes Getriebe
- 4: Trennkupplung
- 5: Elektrische Energiespeicher
- 6: Zieldrehzahl
- 7a: Verlauf der Ist-Drehzahl
- 7b: Verlauf der Ist-Drehzahl
- 8a: Verlauf des Verbrennungsmotormoments
- 8b: Verlauf des Verbrennungsmotormoments
- 9: Verlauf des Moments der elektrischen Maschine
- 9a: Erster Drehmomentpeak
- 9b: Zweiter Drehmomentpeak
- 10: Überschwingung
- 100: Antriebsstrang

## Patentansprüche

1. Verfahren zur Durchführung einer Gangschaltung bei einem Parallel-Hybrid-Fahrzeug, dessen Antriebsstrang (100) einen Verbrennungsmotor (1), eine motorisch und generatorisch betreibbare elektrische Maschine (2) und ein Getriebe (3) umfasst, wobei bei einem Gangwechsel des Getriebes (3) der Elektromotor (2) zur Drehzahlsynchronisation des Getriebes (3) mit einer Zieldrehzahl (6) des Verbrennungsmotors (1) verwendet wird,
wobei die Drehzahlsynchronisation über einen momentengesteuerten Betrieb des Verbrennungsmotors (1) und einen drehzahlgeregelten Betrieb der elektrischen Maschine (2) erfolgt (S3);
**dadurch gekennzeichnet,**
a) **dass** der momentengesteuerten Betrieb des Verbrennungsmotors dadurch realisiert ist, dass zu Beginn der Drehzahlsynchronisierung der Verbrennungsmotor (1) ein erstes Drehmoment (8b) erzeugt, das rampenförmig auf einen ersten Drehmomentsollwert (M1) ansteigt und nach einer vorbestimmten Pulsdauer wieder rampenförmig abfällt; und
b) **dass** der drehzahlregelte Betrieb der elektrischen Maschine dadurch realisiert ist, dass zu Beginn der Drehzahlsynchronisierung die elektrische Maschine ein zweites Drehmoment (9a) erzeugt, das rampenförmig auf einen zweiten Drehmomentsollwert (M2) ansteigt und in die gleiche Richtung wie das erste Drehmoment (8b) des Verbrennungsmotors (1) wirkt und anschließend die verbleibende Drehzahldifferenz zur Zieldrehzahl durch Erzeugung von positiven und/oder negativen Drehmomenten (9b) auf null ausregelt.

2. Verfahren nach Anspruch 1, **dadurch gekennzeichnet, dass** die Drehzahlsynchronisation unter gleichzeitiger Ansteuerung des Verbrennungsmotors (1) und der elektrischen Maschine (2) erfolgt, wobei der Verbrennungsmotor (1) bei einer Hochschaltung abgebremst wird (S3.1A) und/oder bei einer Rückschaltung beschleunigt wird (S3.1B) und wobei das Einregeln auf eine Zieldrehzahl (6) durch den drehzahlgeregelten Betrieb der elektrischen Maschine erfolgt (S3.2).

3. Verfahren nach Anspruch 1 oder 2, **dadurch gekennzeichnet, dass** das erste Drehmoment (8b) einen näherungsweise rechteckförmigen Verlauf aufweist.

4. Verfahren nach einem der vorhergehenden Ansprüche, **dadurch gekennzeichnet, dass** der erste Drehmomentsollwert (M1) und/oder der zweite Drehmomentsollwert (M2) in Abhängigkeit von einer Höhe eines an der Getriebeeingangsseite zu realisierenden Drehzahlsprungs, der für die Drehzahlsynchronisierung des Schaltvorgangs erforderlich ist, festgelegt wird.

5. Verfahren nach einem der Ansprüche 2 bis 4, **dadurch gekennzeichnet,**
a) **dass** die Beschleunigung des Verbrennungsmotors (1) durch eine Erhöhung der Kraftstoffeinspritzung erzeugt wird, und/oder
b) **dass** das Abbremsen des Verbrennungsmotors (1) durch einen Motorbremsbetrieb erzeugt wird, bei dem die Kraftstoffeinspritzung unterbrochen und eine Motorbremseinrichtung, vorzugsweise eine Abgasklappe, aktiviert wird.

6. Verfahren nach einem der vorhergehenden Ansprüche, **dadurch gekennzeichnet, dass** zum Durchführen eines Gangwechsels die folgenden Schritte nacheinander durchgeführt werden: Durchführen eines Momentenabbaus (S1), Ausgelegen eines aktuellen Ganges (S2), Durchführen der Drehzahlsynchronisation (S3) gemäß einem der Ansprüche 1 bis 6, Einlegen eines Folgegangs (S4) und Durchführen eines Momentenaufbaus (S5).

7. Verfahren nach einem der vorhergehenden Ansprüche, **dadurch gekennzeichnet, dass** der Antriebsstrang (100) eine zwischen Verbrennungsmotor (1) und elektrischer Maschine (2) angeordnete Kupplung (4) umfasst, wobei die Drehzahlsynchronisation bei geschlossener Kupplung (4) erfolgt.

8. Steuergerät zur Steuerung der Komponenten eines Antriebsstrang eines Parallel-Hybrid-Fahrzeugs, wobei der Antriebsstrang (100) einen Verbrennungsmotor (1), eine motorisch und generatorisch betreibbare elektrische Maschine (2), ein Getriebe (3) und eine zwischen Verbrennungsmotor (1) und elektrischer Maschine (2) angeordnete Kupplung (4) umfasst,
**dadurch gekennzeichnet, dass** das Steuergerät ausgeführt ist, das Verfahren gemäß einem der Ansprüche 1 bis 6 durchzuführen.

9. Kraftfahrzeug, insbesondere Nutzfahrzeug, aufweisend ein Steuergerät nach Anspruch 8.

## Claims

1. A method for carrying out a gearshift in the case of a parallel hybrid vehicle, the drive train (100) of which comprises an internal combustion engine (1), an electric machine (2) which can be operated as a motor and as a generator, and a transmission (3), the electric motor (2) being used, in the case of a gear change of the transmission (3), for the rotational speed synchronization of the transmission (3) with a target rotational speed (6) of the internal combustion engine (1),
the rotational speed synchronization taking place (S3) via torque-controlled operation of the internal combustion engine (1) and rotational speed-regulated operation of the electric machine (2);
**characterized**
a) **in that** the torque-controlled operation of the internal combustion engine is realized by virtue of the fact that, at the beginning of the rotational speed synchronization, the internal combustion engine (1) generates a first torque (8b) which rises in a ramp-shaped manner to a first torque setpoint value (M1) and, after a predefined pulse duration, drops again in a ramp-shaped manner; and
b) **in that** the rotational speed-regulated operation of the electric machine is realized by virtue of the fact that, at the beginning of the rotational speed synchronization, the electric machine generates a second torque (9a) which rises in a ramp-shaped manner to a second torque setpoint value (M2) and acts in the same direction as the first torque (8b) of the internal combustion engine (1), and subsequently the remaining rotational speed difference with respect to the target rotational speed is corrected to zero by way of the generation of positive and/or negative torques (9b).

2. The method according to Claim 1, **characterized in that** the rotational speed synchronization takes place with simultaneous actuation of the internal combustion engine (1) and the electric machine (2), the internal combustion engine (1) being braked (S3.1A) in the case of an upshift and/or being accelerated (S3.1B) in the case of a downshift, and the correction to a target rotational speed (6) taking place (S3.2) by way of the rotational speed-regulated operation of the electric machine.

3. The method according to Claim 1 or 2, **characterized in that** the first torque (8b) has an approximately rectangular curve.

4. The method according to one of the preceding claims, **characterized in that** the first torque setpoint value (M1) and/or the second torque setpoint value (M2) are/is determined in a manner which is dependent on the magnitude of a rotational speed jump which is to be realized on the transmission input side and is required for the rotational speed synchronization of the shift operation.

5. The method according to one of Claims 2 to 4, **characterized**
a) **in that** the acceleration of the internal combustion engine (1) is produced by way of an increase in the fuel injection, and/or
b) **in that** the braking of the internal combustion engine (1) is produced by way of engine braking operation, in the case of which the fuel injection is interrupted and an engine braking device, preferably an exhaust gas flap, is activated.

6. The method according to one of the preceding claims, **characterized in that**, in order to carry out a gear change, the following steps are carried out one after another: carrying out of a torque reduction (S1), disengaging of a current gear (S2), carrying out of the rotational speed synchronization (S3) according to one of Claims 1 to 6, engaging of a next gear (S4), and carrying out of a torque increase (S5).

7. The method according to one of the preceding claims, **characterized in that** the drive train (100) comprises a clutch (4) which is arranged between the internal combustion engine (1) and the electric machine (2), the rotational speed synchronization taking place in the case of a closed clutch (4).

8. A control unit for controlling the components of a drive train of a parallel hybrid vehicle, the drive train (100) comprising an internal combustion engine (1), an electric machine (2) which can be operated as a motor and as a generator, a transmission (3), and a clutch (4) which is arranged between the internal combustion engine (1) and the electric machine (2), **characterized in that** the control unit is configured to carry out the method according to one of Claims 1 to 6.

9. A motor vehicle, in particular a utility vehicle, having a control unit according to Claim 8.

## Revendications

1. Procédé permettant de réaliser un changement de vitesse sur un véhicule hybride parallèle dont la chaîne cinématique (100) comprend un moteur à combustion interne (1), une machine électrique (2) pouvant fonctionner comme moteur ou générateur, et une boîte de vitesses (3), dans lequel, lors d'un changement de vitesse de la boîte de vitesses (3), le moteur électrique (2) est utilisé pour synchroniser la vitesse de rotation de la boîte de vitesses (3) avec une vitesse de rotation cible (6) du moteur à combustion interne (1),
la synchronisation de vitesse de rotation étant effectuée (S3) par un fonctionnement commandé en fonction des couples du moteur à combustion interne (1) et un fonctionnement régulé en fonction de la vitesse de rotation de la machine électrique (2) ;
**caractérisé en ce que**
a) le fonctionnement commandé en fonction des couples du moteur à combustion interne est réalisé **en ce qu'**au début de la synchronisation de vitesse de rotation, le moteur à combustion interne (1) génère un premier couple (8b) qui augmente de façon linéaire jusqu'à une première valeur théorique de couple (M1) et diminue à nouveau de façon linéaire après une durée d'impulsion prédéterminée ; et
b) le fonctionnement régulé en fonction de la vitesse de rotation de la machine électrique est réalisé **en ce qu'**au début de la synchronisation de vitesse de rotation, la machine électrique génère un deuxième couple (9a) qui augmente de façon linéaire jusqu'à une deuxième valeur théorique de couple (M2) et agit dans le même sens que le premier couple (8b) du moteur à combustion interne (1), et ramène ensuite à zéro la différence de vitesse de rotation restante par rapport à la vitesse de rotation cible en générant des couples (9b) positifs et/ou négatifs.

2. Procédé selon la revendication 1, **caractérisé en ce que** la synchronisation de vitesse de rotation est effectuée avec un pilotage simultané du moteur à combustion interne (1) et de la machine électrique (2), le moteur à combustion interne (1) étant freiné (S3.1A) lors d'un passage à une vitesse supérieure et/ou accéléré (S3.1B) lors d'un passage à une vitesse inférieure, et le réglage sur une vitesse de rotation cible (6) étant effectué (S3.2) par le fonctionnement régulé en fonction de la vitesse de rotation de la machine électrique.

3. Procédé selon la revendication 1 ou 2, **caractérisé en ce que** le premier couple (8b) présente une allure approximativement rectangulaire.

4. Procédé selon l'une quelconque des revendications précédentes, **caractérisé en ce que** la première valeur théorique de couple (M1) et/ou la deuxième valeur théorique de couple (M2) sont fixées en fonction d'une hauteur d'un saut de vitesse de rotation à réaliser du côté entrée de la boîte de vitesses et qui est nécessaire à la synchronisation de vitesse de rotation de l'opération de changement de vitesse.

5. Procédé selon l'une quelconque des revendications 2 à 4, **caractérisé en ce que**
a) l'accélération du moteur à combustion interne (1) est générée par une augmentation de l'injection de carburant, et/ou
b) le freinage du moteur à combustion interne (1) est généré par un fonctionnement de frein moteur dans lequel l'injection de carburant est interrompue et un dispositif de frein moteur, de préférence un clapet d'échappement, est activé.

6. Procédé selon l'une quelconque des revendications précédentes, **caractérisé en ce que** pour réaliser un changement de vitesse, les étapes suivantes sont effectuées successivement : l'exécution d'une réduction de couple (S1), le désenclenchement d'une vitesse actuelle (S2), l'exécution de la synchronisation de vitesse de rotation (S3) selon l'une quelconque des revendications 1 à 6, l'enclenchement d'une vitesse suivante (S4) et l'exécution d'une augmentation de couple (S5).

7. Procédé selon l'une quelconque des revendications précédentes, **caractérisé en ce que** la chaîne cinématique (100) comprend un embrayage (4) disposé entre le moteur à combustion interne (1) et la machine électrique (2), la synchronisation de vitesse de rotation étant effectuée lorsque l'embrayage (4) est fermé.

8. Appareil de commande pour commander les composants d'une chaîne cinématique d'un véhicule hybride parallèle, la chaîne cinématique (100) comprenant un moteur à combustion interne (1), une machine électrique (2) pouvant fonctionner comme moteur et générateur, une boîte de vitesses (3) et un embrayage (4) disposé entre le moteur à combustion interne (1) et la machine électrique (2),
**caractérisé en ce que** l'appareil de commande est réalisé pour effectuer le procédé selon l'une quelconque des revendications 1 à 6.

9. Véhicule automobile, en particulier véhicule utilitaire, présentant un appareil de commande selon la revendication 8.
